# FASCICULE DE BREVET EUROPEEN

(11) **EP 1 424 568 B1**
(45) Date de publication et mention de la délivrance du brevet: **18.11.2015**
(21) Numéro de dépôt: 03104362.3
(22) Date de dépôt: 25.11.2003
(51) Int. Cl.: G01T 1/24, G01T 1/29

(54) **Dètecteur de particules et dispositif de comptage comprenant un pluralité de détecteurs de particules**
Teilchendetektor und Zählvorrichtung mit einer Mehrzahl von Teilchendetektoren
Particle detector and counting device comprising a plurality of particle detectors

(30) Priorité: 26.11.2002 FR 0214811
(43) Date de publication de la demande: 02.06.2004
(73) Titulaire: Commissariat à l'Énergie Atomique et aux Énergies Alternatives, 75015 Paris (FR)
(72) Inventeur: Arques, Marc, 38100 Grenoble (FR); Bardet, Anthony, 36260 Paudy (FR)
(74) Mandataire: Ahner, Philippe

(56) Documents cités:
- EP-A- 1 102 323
- US-B1- 6 424 750
- PATENT ABSTRACTS OF JAPAN vol. 1999, no. 01, 29 janvier 1999 (1999-01-29) & JP 10 285466 A (TOSHIBA CORP), 23 octobre 1998 (1998-10-23)

## Description

### Domaine technique et art antérieur

L'invention concerne un détecteur de particules comprenant des moyens de comptage pour délivrer une information de comptage relative à un nombre de particules détectées ainsi qu'un dispositif de comptage de particules comprenant une pluralité de détecteurs de particules.

L'invention concerne également un procédé de lecture de détecteur de particules ainsi qu'un procédé de lecture de matrice de détecteurs de particules.

L'invention s'applique, entre autres, dans le domaine de la radiologie (radiographie, radioscopie). Les particules détectées sont alors des rayons X.

Selon l'art connu, les dispositifs de formation d'images utilisés en radiologie sont constitués de matrices de détecteurs. Chaque détecteur, plus communément appelé « pixel détecteur », délivre un signal qui est une fonction de la quantité de particules qu'il détecte.

La radiographie est un examen à haute résolution spatiale sur une image unique réalisée sur la base d'une dose d'irradiation moyenne ou forte. Pour atteindre une résolution spatiale élevée, le détecteur doit être muni de pixels détecteurs de petite taille (typiquement de 50µm à 150µm).

La radioscopie est un examen à cadence vidéo qui peut durer de plusieurs secondes à plusieurs minutes. La dose d'irradiation par image est alors beaucoup plus faible afin que la dose totale cumulée par un patient soit acceptable. On obtient alors une image bruitée, car la statistique du nombre de photons détectés par pixel détecteur est mauvaise. Il est alors illusoire de vouloir détecter des objets de la taille des pixels.

La radiographie et la radioscopie ont donc des modes de fonctionnement très sensiblement différents. Il est connu, cependant, de mettre en oeuvre ces deux modes de fonctionnement à l'aide de matrices de détecteurs fonctionnant par intégration de courants de détection dans des capacités de stockage.

Dans le cas de la radioscopie, par exemple, les pixels détecteurs sont regroupés, généralement par quatre (2x2) ou par seize (4x4), avant d'être lus. Ainsi, sans perdre en résolution spatiale, on réduit la cadence de sortie. Ceci permet également de réduire le bruit de lecture. Les groupements de pixels détecteurs sont réalisés en mélangeant les informations des capacités de stockage des pixels concernés, avant lecture, par mise en conduction d'interrupteurs qui les relient. Il suffit ensuite de lire l'un quelconque des pixels détecteurs du groupe pour obtenir la moyenne des informations détectées.

Cette solution présente plusieurs inconvénients. Tout d'abord, lorsqu'un détecteur est défectueux, c'est la réponse de tout le groupe de détecteurs auquel appartient le détecteur défectueux qui n'est pas utilisable. Par ailleurs, le fonctionnement par intégration est mal adapté à la réduction du bruit. En effet, pour réduire le bruit de lecture, il est préférable de travailler en comptage car il est alors possible de numériser les signaux dès leur sortie des détecteurs.

L'invention ne présente pas les inconvénients mentionnés ci-dessus.

### Exposé de l'invention

En effet, l'invention concerne un détecteur de particules comprenant des moyens pour délivrer des impulsions électriques à partir de particules détectées, une impulsion électrique délivrée correspondant à une particule détectée, et des moyens de comptage des impulsions électriques délivrées. Le détecteur comprend des moyens aptes à recevoir et à transmettre aux moyens de comptage des impulsions électriques provenant d'au moins un deuxième détecteur de particules et des moyens aptes à transmettre les impulsions électriques qu'il délivre et les impulsions électriques qu'il reçoit dudit deuxième détecteur de particules vers des moyens de comptage d'un troisième détecteur de particules.

Selon une caractéristique supplémentaire du détecteur de particules,, les moyens aptes à recevoir et à transmettre aux moyens de comptage des impulsions électriques provenant d'au moins un deuxième détecteur de particules et les moyens aptes à transmettre les impulsions électriques qu'il délivre et les impulsions électriques qu'il reçoit dudit deuxième détecteur de particules vers des moyens de comptage d'un troisième détecteur de particules comprennent une porte « OU » ayant une première entrée sur laquelle sont appliquées les impulsions électriques délivrées par le détecteur de particules, au moins une entrée supplémentaire sur laquelle sont appliquées les impulsions électriques délivrées par le deuxième détecteur de particules, et une sortie reliée, d'une part, à une entrée des moyens de comptage et, d'autre part, à une entrée d'une porte « OU » des moyens de comptage du troisième détecteur de particules.

Selon une caractéristique supplémentaire, le détecteur de particules comprend un dispositif monostable placé entre la sortie des moyens pour délivrer des impulsions électriques à partir des particules détectées et la première entrée.

Selon encore une caractéristique supplémentaire, le détecteur de particules est tel que les moyens aptes à recevoir et à transmettre aux moyens de comptage des impulsions électriques provenant d'au moins un deuxième détecteur de particules et les moyens aptes à transmettre les impulsions électriques qu'il délivre et les impulsions électriques qu'il reçoit dudit deuxième détecteur de particules vers des moyens de comptage d'un troisième détecteur de particules comprennent un interrupteur monté en série sur l'entrée supplémentaire.

Selon encore une caractéristique supplémentaire, le détecteur de particules comprend des moyens permettant d'inhiber le fonctionnement des moyens de comptage.

L'invention concerne également un dispositif de comptage de particules comprenant une pluralité de détecteurs de particules selon l'invention.

Selon une caractéristique supplémentaire, les détecteurs de particules du dispositif de comptage sont agencés sous forme de matrice de détecteurs.

Selon encore une caractéristique supplémentaire, le dispositif de comptage comprend des moyens pour agencer les détecteurs de particules sous la forme de N blocs de n x m détecteurs de particules voisins, N étant un nombre entier supérieur ou égal à 1, n et m étant des nombres entiers supérieurs à 1, de sorte qu'au moins un bloc de détecteurs de particules comprenne un détecteur de particules qui compte les particules détectées par tout ou partie des détecteurs de particules du bloc.

Selon encore une caractéristique supplémentaire, le dispositif de comptage comprend des moyens pour modifier le nombre n x m de détecteurs de particules qui participent à au moins un bloc de détecteurs de particules.

Selon encore une caractéristique supplémentaire, un détecteur de particules Di/j situé à l'intersection d'une ligne de rang i et d'une colonne de rang j, comprend une porte « OU » à trois entrées, une première entrée supplémentaire étant reliée à un premier interrupteur et une deuxième entrée supplémentaire étant reliée à un deuxième interrupteur, les premier et deuxième interrupteurs du détecteur de particules Di/j étant reliés, respectivement, à la sortie de la porte « OU » du détecteur de particules D(i-1)/j et à la sortie de la porte « OU » du détecteur de particules Di/(j-1), la sortie de la porte « OU » du détecteur Di/j étant reliée au premier interrupteur du détecteur de particules D(i+1)/j et au deuxième interrupteur du détecteur de particules Di/(j+1).

L'invention concerne également un procédé de lecture du détecteur de particules selon la revendication 1. Le procédé comprend une étape durant laquelle au moins un premier détecteur de particules reçoit et compte les impulsions délivrées par au moins un deuxième détecteur de particules et une étape de durant laquelle les impulsions délivrées par le premier détecteur de particules et les impulsions délivrées au premier détecteur de particules par le deuxième détecteur de particules sont transmises vers des moyens de comptage d'un troisième détecteur de particules.

L'invention concerne également un procédé de comptage de particules détectées par une matrice de détecteurs de particules. Le procédé comprend une étape de commande pour agencer les détecteurs de particules de la matrice sous la forme de N blocs de n x m détecteurs de particules voisins, N étant un nombre entier supérieur ou égal à 1, n et m étant des entiers supérieurs à 1, les détecteurs de particules d'au moins un bloc étant lues à l'aide d'un procédé de lecture de détecteur selon l'invention de sorte qu'un détecteur de particules dudit au moins un bloc compte les particules détectées par tout ou partie des n x m détecteurs de particules dudit bloc.

Selon une caractéristique supplémentaire, le procédé de comptage comprend une inhibition des moyens de comptage des détecteurs de particules du bloc autres que le détecteur de particules du bloc qui compte les particules détectées par tout ou partie des m x n détecteurs de particules.

### Brève description des figures

D'autres caractéristiques et avantages de l'invention apparaîtront à la lecture d'un mode de réalisation préférentiel de l'invention fait en référence aux figures jointes parmi lesquelles :
- la figure 1 représente un détecteur de particules comprenant des moyens de comptage pour délivrer une information de comptage relative à un nombre de particules détectées selon l'art connu ;
- la figure 2 représente un dispositif de comptage de particules comprenant une pluralité de détecteurs de particules selon l'art connu ;
- la figure 3 représente un premier exemple de détecteur de particules comprenant des moyens de comptage selon l'invention ;
- la figure 4 représente un premier perfectionnement du détecteur de particules selon l'invention ;
- la figure 5 représente un premier exemple de dispositif de comptage comprenant une pluralité de détecteurs de particules selon l'invention ;
- la figure 6 représente un deuxième perfectionnement du détecteur de particules selon l'invention ;
- la figure 7 représente un deuxième exemple de détecteur de particules comprenant des moyens de comptage selon l'invention ;
- la figure 8 représente un exemple de dispositif de comptage comprenant une pluralité de détecteurs de particules selon le deuxième exemple de l'invention ;
- la figure 9 représente, de façon symbolique, un exemple de matrice de détecteurs de particules formant dispositif de comptage selon l'invention.

Sur toutes les figures, les mêmes repères désignent les mêmes éléments.

### Description détaillée de modes de mise en oeuvre de l'invention

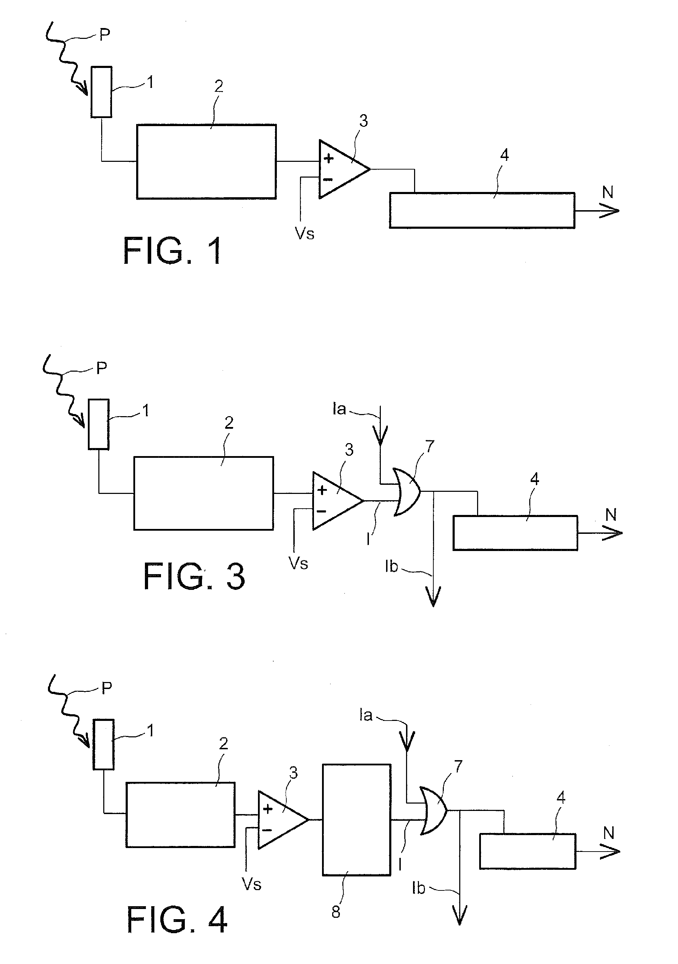

La figure 1 représente un détecteur de particules selon l'art connu comprenant des moyens de comptage pour délivrer une information de comptage relative à un nombre de particules détectées.

Le détecteur de particules comprend un élément semi-conducteur 1, un circuit de traitement 2, un comparateur 3 et un compteur 4. L'élément semi-conducteur 1 comprend une ou plusieurs couches de détection qui absorbent les particules P, par exemple des rayons X, et transforment ceux-ci en impulsions électriques. Le circuit de traitement 2 traite les impulsions électriques (amplification, filtrage, etc.) et le comparateur 3 compare chaque impulsion électrique issue du circuit de traitement 2 à une tension de seuil Vs. Le comparateur 3 délivre ainsi une impulsion électrique numérique à partir de l'impulsion électrique issue du circuit de traitement 2. Les impulsions électriques numériques incrémentent le compteur 4. A la fin de l'irradiation, le compteur 4 contient une information représentative du nombre N de particules détectées.

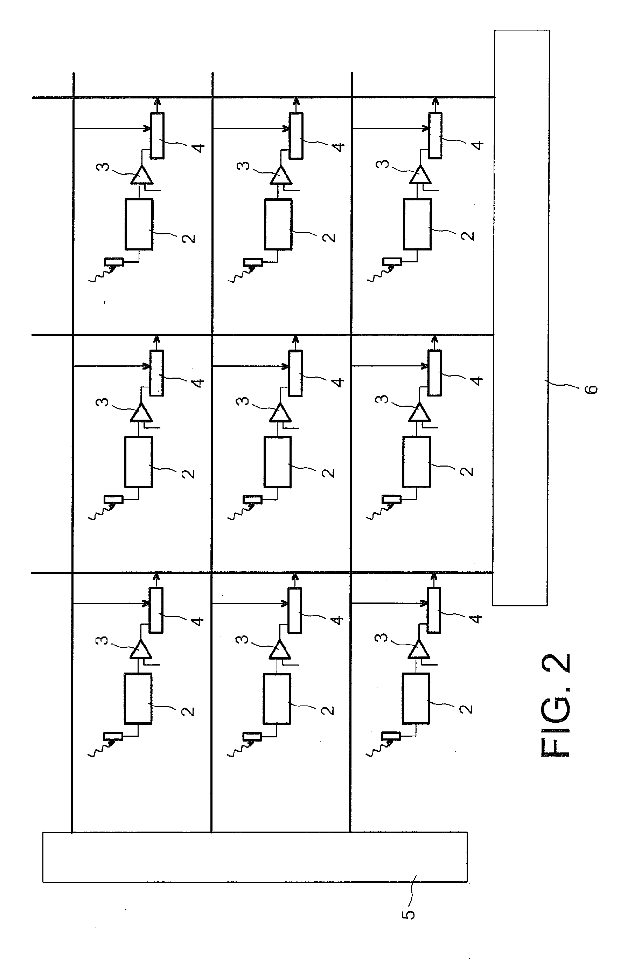

La figure 2 représente un dispositif de comptage de particules comprenant une pluralité de détecteurs de particules selon l'art connu. Le dispositif de comptage est agencé sous la forme de lignes et de colonnes de détecteurs. Un registre 5 à décalage d'adressage de lignes commande, ligne par ligne, la lecture des compteurs 4. Les informations de comptage délivrées par un compteur 4 sont transmises, colonne par colonne, à un multiplexeur de colonne 6.

La figure 3 représente un premier exemple de détecteur de particules comprenant des moyens de comptage selon l'invention. En plus des éléments mentionnés ci-dessus, le détecteur de particules selon l'invention comprend une porte « OU » 7 placée entre le comparateur 3 et le compteur 4. La porte « OU » a une première entrée reliée à la sortie du comparateur 3 et une deuxième entrée reliée à la sortie d'une porte « OU » d'un premier détecteur voisin (non représenté sur la figure). La sortie de la porte « OU » est reliée, d'une part, au compteur 4 et, d'autre part, à une entrée d'une porte « OU » d'un deuxième détecteur voisin (également non représenté sur la figure).

La porte « OU » 7 réalise la fonction « OU » entre l'impulsion numérique I délivrée par le comparateur 3 et une impulsion numérique la délivrée par le comparateur du premier détecteur voisin. L'impulsion numérique Ib (Ib = I ou Ia) issue de la porte « OU » 7 est transmise à l'entrée de la porte « OU » du deuxième détecteur voisin. De façon générale, chaque détecteur réalise la fonction « OU » entre les impulsions qu'il détecte et des impulsions en provenance d'un détecteur voisin. Chaque détecteur peut donc compter ses propres événements ainsi que les événements qu'il importe.

Dans le cas où la durée de l'impulsion électrique délivrée par l'élément semi-conducteur 1 est très brève, par exemple 10ns, il se peut que le dispositif de traitement 2 allonge très sensiblement cette durée pour porter celle-ci, par exemple, jusqu'à 100 ns. Le comparateur peut alors basculer à 1 pendant toute cette durée. La porte « OU » est alors insensible aux informations importées du détecteur voisin pendant toute cette durée. La figure 4 représente un perfectionnement du circuit de la figure 3 permettant de réduire la durée de l'impulsion en sortie du comparateur 3. Un dispositif monostable 8 est alors intercalé entre la sortie du comparateur 3 et l'entrée de la porte « OU » 7. Le dispositif monostable 8 déclenche sur les fronts montants de la sortie du comparateur et revient automatiquement à zéro après une durée prédéterminée, par exemple 5 ns. Les impulsions traitées par la porte « OU » sont alors brèves et autorisent avantageusement un fort taux de comptage.

Dans la suite de la description, le dispositif monostable 8 n'est pas représenté sur les figures afin de ne pas surcharger les dessins. De façon préférentielle, cependant, un détecteur de particules selon l'invention comprend un tel dispositif.

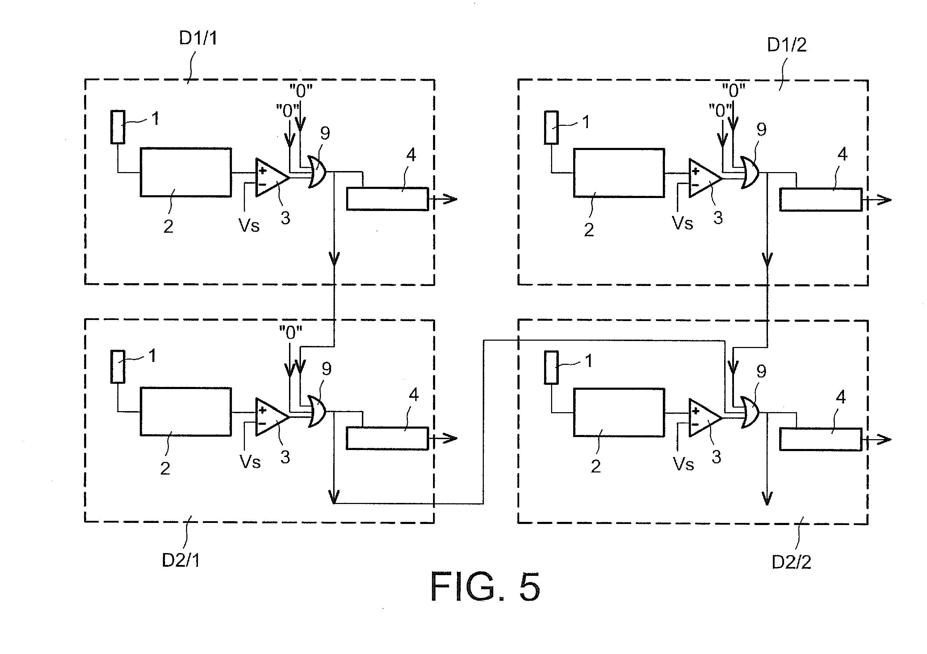

La figure 5 représente un premier exemple de dispositif de comptage comprenant une pluralité de détecteurs de particules selon l'invention.

Le dispositif de comptage représenté, à titre d'exemple, sur la figure 5, comprend un groupement de quatre détecteurs de particules D1/1, D1/2, D2/1, D2/2 agencés sur deux lignes et deux colonnes. Les détecteurs Di/j (i=1, 2 ; j=1, 2) sont repérés par leurs indices de ligne i et de colonne j.

La sortie de la porte « OU » du détecteur D1/1 est reliée à une entrée de la porte « OU » du détecteur D2/1 et la sortie de la porte « OU » du détecteur D1/2 est reliée à une entrée de la porte « OU » du détecteur D2/2. Par ailleurs, la sortie de la porte « OU » du détecteur D2/1 est reliée à une entrée de la porte « OU » du détecteur D2/2. Il s'en suit que :
- le compteur du détecteur D1/1 compte les particules détectées par le détecteur D1/1 ;
- le compteur du détecteur D2/1 compte les particules détectées par les détecteurs D2/1 et D1/1 ;
- le compteur du détecteur D1/2 compte les particules détectées par le détecteur D1/2 ; et
- le compteur du détecteur D2/2 compte les particules détectées par les quatre détecteurs D1/1, D1/2, D2/1 et D2/2.

Selon le mode de réalisation représenté en figure 5, les portes « OU » 9 des détecteurs D1/1, D1/2, D2/1, et D2/2 comprennent trois entrées pour recueillir des impulsions détectées. S'il est nécessaire que la porte « OU » du détecteur D2/2 comprenne trois entrées pour recueillir les différentes impulsions détectées, il est clair que deux entrées suffisent pour la porte « OU » du détecteur D2/1 et que qu'une seule entrée suffit pour les portes « OU » des détecteurs D1/1 et D1/2. C'est pour des raisons de commodité (réalisation de circuits identiques) que les portes « OU » de tous les détecteurs comportent trois entrées. Les entrées « non nécessaires » des portes « OU » des détecteurs D1/1, D1/2 et D2/1 sont alors maintenues à « 0 » en permanence (cas de la logique positive). Des groupements de quatre détecteurs tels que représentés en figure 5 peuvent être rassemblés pour former une matrice de détecteurs. Le dispositif de comptage ainsi obtenu peut alors s'appliquer, par exemple, à la radioscopie.

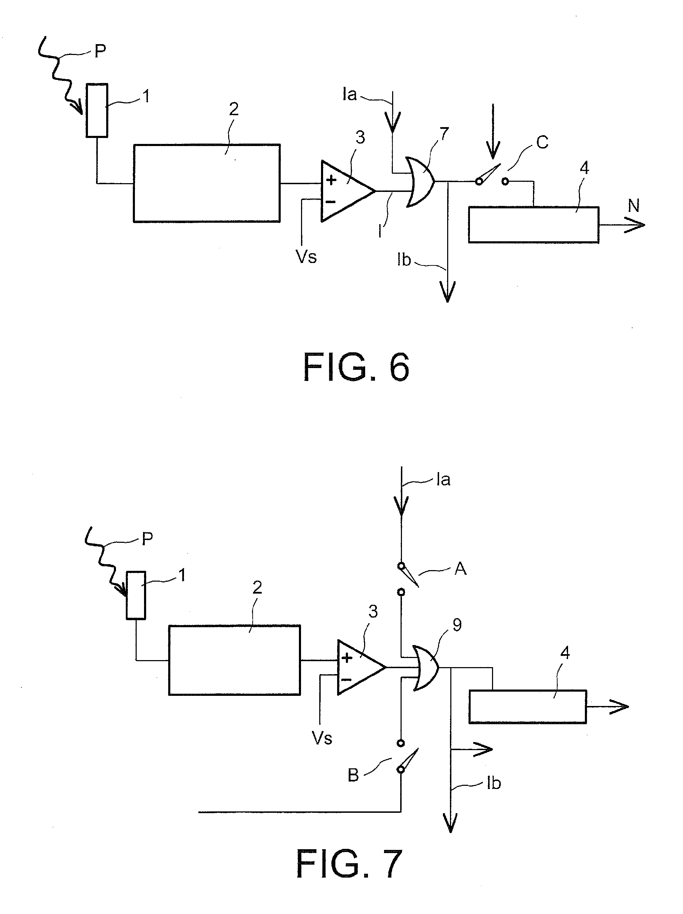

Dans le fonctionnement par regroupement de détecteurs, il apparaît que certains compteurs n'ont pas besoin de fonctionner puisque l'information qu'ils délivrent n'est pas utilisée. Il peut alors être avantageux, par exemple pour réduire la consommation, d'inhiber complètement ces compteurs. A cette fin, chaque détecteur peut alors comprendre des moyens pour inhiber le compteur qu'il contient. Un détecteur équipé de moyens pour inhiber le compteur est représenté, par exemple, en figure 6. Les moyens pour inhiber le compteur 4 sont constitués d'un interrupteur C commandé pour s'ouvrir quand le compteur doit être inhibé et se fermer quand le compteur doit être actif.

Selon un perfectionnement de l'invention, le détecteur de particules comprend des moyens permettant de modifier le nombre de détecteurs qui participent à un groupement de détecteurs. La figure 7 représente un exemple de détecteur de particules selon un tel perfectionnement.

Une première entrée de la porte « OU » 9 à trois entrées est reliée à un premier interrupteur A et une deuxième entrée de la porte « OU » 9 est reliée à un deuxième interrupteur B. Selon l'état de commande des interrupteurs A et B, il est alors possible, par exemple, qu'un même détecteur de particules soit utilisé individuellement (mode radiographie), dans un groupement de 2x2 détecteurs (premier exemple de mode de radioscopie) ou dans un groupement de 4x4 détecteurs (deuxième exemple de mode de radioscopie), d'autres groupements de détecteurs étant également possibles. Il faut noter cependant que l'ouverture d'un interrupteur A ou B ne suffit alors pas pour contrôler correctement l'état d'entrée de la porte « OU » 9. Pour les mêmes raisons que celles énoncées ci-dessus, l'entrée de la porte « OU » 9 qui est reliée à un interrupteur en position ouverte doit alors être portée à un niveau logique « 0 » (cas de la logique positive) pour assurer un fonctionnement correct du détecteur.

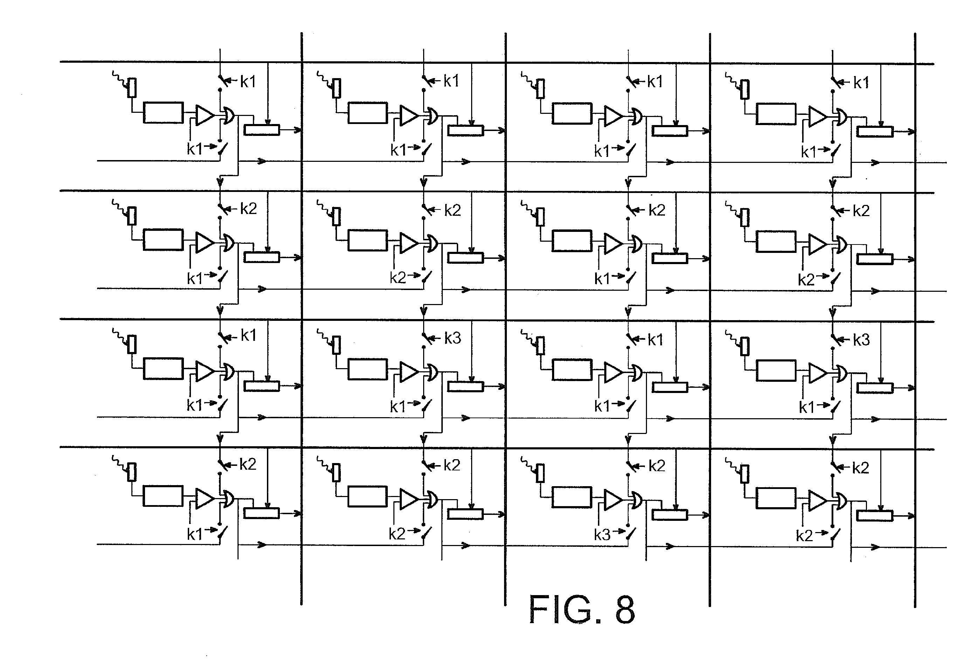

La figure 8 représente, à titre d'exemple, un dispositif de comptage selon l'invention constitué d'une matrice de seize détecteurs (4x4) tels que le détecteur représenté en figure 7. Pour des raisons de commodité, les circuits aptes à porter les entrées des portes « OU » au niveau logique « 0 » (cas de la logique positive) lorsque les interrupteurs A, B sont en position ouverte n'ont pas été représentés sur la figure.

Les premier et deuxième interrupteurs A et B d'un détecteur Di/j sont reliés, respectivement, à la sortie de la porte « OU » du détecteur D(i-1)/j et à la sortie de la porte « OU » du détecteur Di/ (j-1) .Par ailleurs, la sortie de la porte « OU » d'un détecteur Di/j est reliée au premier interrupteur A du détecteur D(i+1)/j et au deuxième interrupteur B du détecteur Di/ (j+1).

En fonction de l'état (passant ou bloqué) des interrupteurs A et B du détecteur Di/j, ce dernier est ainsi apte à recueillir, sur une première entrée de sa porte « OU » 9, le signal de sortie de la porte « OU » du détecteur D(i-1)/j et, sur une deuxième entrée, le signal de sortie du détecteur Di/(j-1). De même, en fonction de l'état (passant ou bloqué) des interrupteurs A et B des détecteurs Di/(j+1) et D(i+1)/j, le détecteur Di/j est apte à délivrer le signal de sortie de sa porte « OU » 9 sur une première entrée de la porte « OU » du détecteur D (i+1) /j et sur une deuxième entrée de la porte « OU » du détecteur Di/(j+1).

Les interrupteurs A et B sont reliés à différentes commandes k1, k2, k3. A titre d'exemple non limitatif, un mode de réalisation particulier relatif aux commandes k1, k2, k3 va maintenant être décrit.

Selon ce mode de réalisation particulier (cf. figure 7), une même commande k1 est appliquée :
- sur les interrupteurs A et B des détecteurs de la première ligne,
- sur les interrupteurs B des détecteurs D2/1 et D2/3,
- sur les interrupteurs A des détecteurs D3/1 et D3/3 et de l'ensemble des interrupteurs B des détecteurs de la troisième ligne,
- sur l'interrupteur B du détecteur D4/1.

De même, une même commande k2 est appliquée :
- sur l'ensemble des interrupteurs A des détecteurs de la deuxième ligne et sur les interrupteurs B des détecteurs D2/2 et D2/4,
- sur l'ensemble des interrupteurs A des détecteurs de la quatrième ligne et sur les interrupteurs B des détecteurs D4/2 et D4/4.

Enfin, une même commande k3 est appliquée sur les interrupteurs A des détecteurs D3/2 et D3/4 et sur l'interrupteur B du détecteur D4/3.

Les valeurs prises par les commandes k1, k2, k3 vont maintenant être précisées, selon différentes applications, à savoir, l'application selon laquelle chaque détecteur est utilisé individuellement (mode radiographie), l'application selon laquelle les détecteurs sont utilisés par groupes de 2x2 détecteurs voisins (premier exemple de mode de radioscopie), ou encore l'application selon laquelle l'ensemble des détecteurs (4x4 détecteurs) sont utilisés (deuxième exemple de mode de radioscopie).

Dans tous les cas, la commande k1 bloque les interrupteurs sur lesquels elle est appliquée. Les commandes k2 et k3 vont maintenant être précisées selon les cas.

### 1^{ER} cas : chaque détecteur est utilisé individuellement (mode de radioscopie)

Les commandes k2 et k3 sont alors portées au niveau bas (en logique positive). Tous les interrupteurs sont alors bloqués. Chaque détecteur ne compte que les particules qu'il détecte.

### 2^{ème} cas : les détecteurs sont utilisés par groupes de 2x2 détecteurs voisins (premier exemple de mode de radioscopie)

La commande k2 est portée au niveau haut et la commande k3 est portée au niveau bas (en logique positive). Le comptage suivant est alors effectué :
- le détecteur D2/2 compte les particules des détecteurs D1/1, D1/2, D2/1, et D2/2,
- le détecteur D2/4 compte les particules des détecteurs D1/3, D1/4, D2/3 et D2/4,
- le détecteur D4/2 compte les particules des détecteurs D3/1, D3/2, D4/1, et D4/2,
- le détecteur D4/4 compte les particules des détecteurs D3/3, D3/4,D4/3 et D4/4.

### 3^{ème} cas : l'ensemble des détecteurs sont utilisés (4x4 détecteurs/deuxième exemple de mode de radioscopie)

Les commandes k2 et k4 sont portées au niveau haut (cas de la logique positive). Le détecteur D4/4 compte alors les particules détectées par l'ensemble des détecteurs Di/j (i,j=1,2,3,4).

De façon plus générale, une grande variété de géométries de groupements de pixels détecteurs sont avantageusement possibles selon l'invention. Il est ainsi possible, par exemple, de grouper les pixels détecteurs selon seulement une direction (ligne ou colonne). En particulier, les groupements de n lignes x 1 colonne peuvent être intéressants. En effet, ces groupements ne nécessitent que des fonctions « OU » à deux entrées, suppriment les liaisons horizontales entre pixels détecteurs, permettent d'accélérer la lecture de la matrice de détecteurs puisque seule une ligne sur n est adressée, et déplacent le problème de sommation des colonnes en périphérie ou à l'extérieur de la matrice, ce qui, dans certains cas, peut être acceptable au vu des avantages précédents.

Un autre avantage du dispositif selon l'invention est de permettre une modification de la position des groupes de pixels détecteurs d'une image à l'autre. Sans augmenter le nombre d'entrées des circuits « OU » et, en conséquence, sans augmenter le nombre d'interrupteurs mais en modifiant seulement le nombre de commandes de ces interrupteurs, il est possible de déplacer la position des groupes de pixels détecteurs d'une image à l'autre. A titre d'exemple non limitatif, pour des groupements de 4 x 4 pixels, il est possible de faire des séquences d'images comme suit:
- image n°1 : position de référence de chaque groupe (c'est la position de départ pour chaque groupe) ;
- image n°2 : décalage de la position d'un groupe de +2 lignes en horizontal, sans décalage vertical ;
- image n°3 : décalage de la position d'un groupe de +2 lignes en horizontal et de +2 colonnes en vertical ;
- image n°4 : décalage de la position d'un groupe de +2 colonnes en vertical, sans décalage en horizontal ;
- image n°5 : retour à la position de référence des groupes ; etc.

De telles modifications permettent d'améliorer très sensiblement la qualité de l'image formée (forte réduction des effets de moiré et sensible augmentation de la résolution spatiale de l'image).

D'autres avantages de l'invention vont maintenant être décrits.

De façon connue en soi, dans les matrices détectrices pour lesquelles chaque pixel détecteur est utilisé individuellement, il est généralement admis qu'un pixel détecteur isolé puisse être défectueux. L'information manquante du pixel détecteur défectueux est alors remplacée par la valeur moyenne des signaux détectés par les pixels détecteurs voisins du pixel défectueux. Cette valeur moyenne est calculée par un système de traitement d'image. Par contre, lorsqu'on regroupe des pixels détecteurs, il n'est pas acceptable qu'un seul pixel défectueux puisse provoquer la perte de l'information contenue dans tout un groupe de pixels détecteurs. Le dispositif de comptage selon l'invention permet d'éviter cet inconvénient, comme cela va apparaître à la lecture de l'exemple décrit ci-dessous.

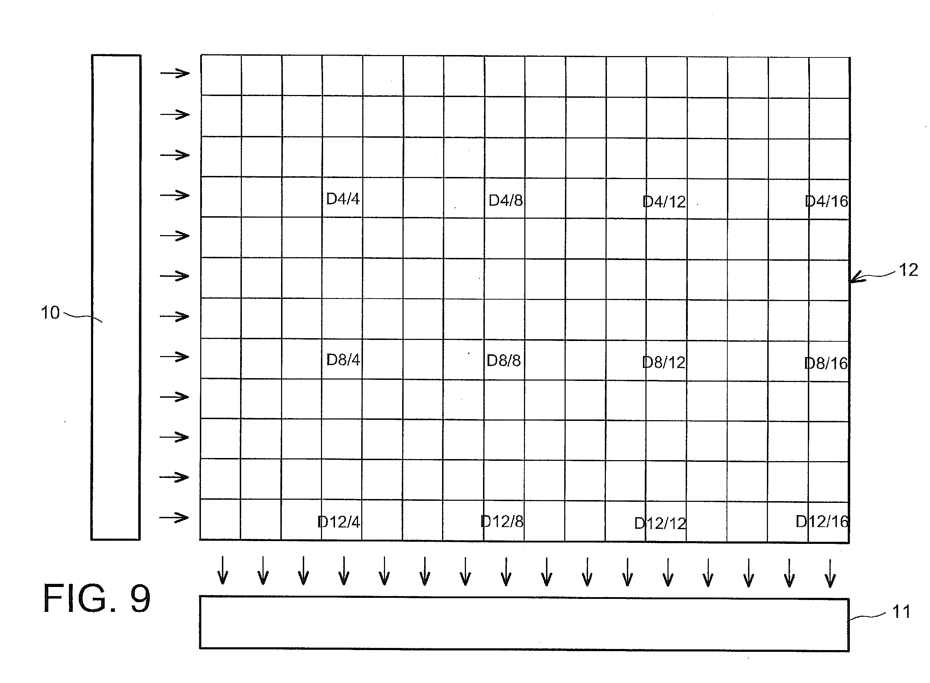

Considérons un dispositif de comptage selon l'invention pour lequel les détecteurs sont regroupés par blocs de 4x4 détecteurs. Un exemple d'un tel dispositif de comptage est représenté de façon symbolique en figure 9.

Le dispositif de comptage comprend un registre 10 à décalage d'adressage, un multiplexeur de colonnes 11 et une matrice de détecteurs 12. Pour une configuration où les détecteurs sont regroupés par blocs de 4x4 détecteurs, les détecteurs susceptibles d'être lus sont :
- les détecteurs D4/4, D4/8, D4/12, et D4/16 pour les lignes de rang 1, 2, 3, 4,
- les détecteurs D8/4, D8/8, D8/8 et D8/16 pour les lignes de rang 5, 6, 7, 8, et
- les détecteurs D12/4, D12/8, D12/12 et D12/16 pour les lignes de rang 9, 10, 11, 12.

La lecture du détecteur D8/8, par exemple, s'effectue en adressant la huitième ligne et en sélectionnant la huitième colonne. Supposons que le détecteur D8/8 soit défectueux (une telle information peut être obtenue, par exemple, lors d'une lecture individuelle des détecteurs). Au lieu de lire les détecteurs D8/4, D8/8, D8/12 et D8/16 qui délivrent l'information contenue dans les groupements de détecteurs des lignes de rang 5, 6, 7, 8, ce sont alors les détecteurs D8/4, D8/7, D8/12 et D8/16 qui sont lus.

C'est donc le détecteur D8/7 qui, s'il n'est pas lui-même défectueux, est lu à la place du détecteur D8/8. Le détecteur D8/7 contient la somme des signaux de neuf détecteurs du groupe sur seize. Le bloc de détecteurs est donc toujours représenté dans l'image formée, malgré un rapport signal sur bruit moins bon que dans les groupes nominaux.

Comme cela a déjà été mentionné précédemment, seul le compteur du pixel détecteur qui est lu est utilisé. Pour une configuration donnée de pixels détecteurs, il est alors possible de n'alimenter que les compteurs des pixels détecteurs destinés à être lus. La consommation du dispositif de comptage s'en trouve alors très avantageusement réduite. Cependant, si on veut conserver la possibilité de lecture des blocs en présence de pixels défectueux comme décrit ci-dessus, l'alimentation des compteurs de tous les pixels détecteurs des lignes destinées à être lues doit être maintenue.

## Revendications

1. Détecteur de particules comprenant des moyens (1, 2, 3) pour délivrer des impulsions électriques à partir de particules détectées, une impulsion électrique délivrée correspondant à une particule détectée, et des moyens de comptage (4) des impulsions électriques délivrées, **caractérisé en ce qu'**il comprend des moyens (7, 9) aptes à recevoir et à transmettre aux moyens de comptage (4) des impulsions électriques provenant d'au moins un deuxième détecteur de particules et des moyens (7, 9) aptes à transmettre les impulsions électriques qu'il délivre et les impulsions électriques qu'il reçoit dudit deuxième détecteur de particules vers des moyens de comptage d'un troisième détecteur de particules, les moyens (7, 9) aptes à recevoir et à transmettre aux moyens de comptage (4) des impulsions électriques provenant d'au moins un deuxième détecteur de particules et les moyens (7, 9) aptes à transmettre les impulsions électriques qu'il délivre et les impulsions électriques qu'il reçoit dudit deuxième détecteur de particules vers un troisième détecteur de particules comprenant une porte « OU » ayant une première entrée sur laquelle sont appliquées les impulsions électriques délivrées par le détecteur de particules, au moins une entrée supplémentaire sur laquelle sont appliquées les impulsions électriques délivrées par le deuxième détecteur de particules, et une sortie reliée, d'une part, à une entrée des moyens de comptage (4) et, d'autre part, à une entrée d'une porte « OU » des moyens de comptage du troisième détecteur de particules.

2. Détecteur de particules selon la revendication 1, dans lequel un dispositif monostable est placé entre la sortie des moyens (1, 2, 3) pour délivrer des impulsions électriques à partir des particules détectées et la première entrée.

3. Détecteur de particules selon l'une quelconque des revendications 1 ou2, **caractérisé en ce que** les moyens aptes à recevoir et à transmettre aux moyens de comptage (4) des impulsions électriques provenant d'au moins un deuxième détecteur de particules et les moyens aptes à transmettre les impulsions électriques qu'il délivre et les impulsions électriques qu'il reçoit dudit deuxième détecteur de particules vers des moyens de comptage d'un troisième détecteur de particules comprennent un interrupteur (A, B) monté en série sur l'entrée supplémentaire.

4. Détecteur de particules selon l'une quelconque des revendications précédentes, **caractérisé en ce qu'**il comprend des moyens (C) permettant d'inhiber le fonctionnement des moyens de comptage (4).

5. Dispositif de comptage de particules, **caractérisé en ce qu'**il comprend une pluralité de détecteurs de particules selon l'une quelconque des revendications 1 à 4.

6. Dispositif de comptage selon la revendication 5, **caractérisé en ce que** les détecteurs de particules sont agencés sous forme de matrice de détecteurs.

7. Dispositif de comptage selon la revendication6, **caractérisé en ce qu'**il comprend des moyens pour agencer les détecteurs de particules sous la forme de N blocs de n x m détecteurs de particules voisins, N étant un nombre entier supérieur ou égal à 1 et n et m étant des nombres entiers supérieurs à 1 , de sorte qu'au moins un bloc de détecteurs de particules comprenne un détecteur de particules qui compte les particules détectées par tout ou partie des détecteurs de particules du bloc.

8. Dispositif de comptage selon la revendication 7, **caractérisé en ce qu'**il comprend des moyens pour modifier le nombre de détecteurs de particules qui participent à au moins un bloc de détecteurs de particules.

9. Dispositif de comptage selon l'une quelconque des revendications 6 à 8, **caractérisé en ce qu'**un détecteur de particules Di/j situé à l'intersection d'une ligne de rang i et d'une colonne de rang j, comprend une porte « OU » à trois entrées, une première entrée supplémentaire étant reliée à un premier interrupteur (A) et une deuxième entrée supplémentaire étant reliée à un deuxième interrupteur (B), les premier (A) et deuxième (B) interrupteurs du détecteur de particules Di/j étant reliés, respectivement, à la sortie de la porte « OU » du détecteur de particules D(i-1)/j et à la sortie de la porte « OU » du détecteur de particules Di/(j-1), la sortie de la porte « OU » du détecteur Di/j étant reliée au premier interrupteur (A) du détecteur de particules D(i+1)/j et au deuxième interrupteur (B) du détecteur de particules Di/(j+1).

10. Procédé de lecture du détecteur de particules selon la revendication 1, **caractérisé en ce qu'**il comprend une étape durant laquelle au moins un premier détecteur de particules reçoit et compte les impulsions délivrées par au moins un deuxième détecteur de particules et une étape de durant laquelle les impulsions délivrées par le premier détecteur de particules et les impulsions délivrées au premier détecteur de particules par le deuxième détecteur de particules sont transmises vers des moyens de comptage d'un troisième détecteur de particules.

11. Procédé de comptage de particules détectées par une matrice de détecteurs de particules, **caractérisé en ce qu'**il comprend une étape de commande pour agencer les détecteurs de particules de la matrice sous la forme de N blocs de n x m détecteurs de particules voisins, N étant un nombre entier supérieur ou égal à 1 et n et m étant des nombres entiers supérieurs à 1 , les détecteurs de particules d'au moins un bloc étant lues à l'aide d'un procédé de lecture selon la revendication 10 de sorte qu'un détecteur de particules dudit au moins un bloc compte les particules détectées par tout ou partie des n x m détecteurs de particules dudit bloc.

12. Procédé selon la revendication 11, **caractérisé en ce qu'**il comprend une inhibition de moyens de comptage des détecteurs de particules du bloc autres que le détecteur de particules du bloc qui compte les particules détectées par tout ou partie des m x n détecteurs de particules.

## Patentansprüche

1. Partikeldetektor, umfassend Mittel (1, 2, 3) zum Liefern von elektrischen Pulsen ausgehend von erfaßten Partikeln, wobei ein gelieferter elektrischer Puls einem erfaßten Partikel entspricht, sowie Mittel (4) zum Zählen der gelieferten elektrischen Pulse, **dadurch gekennzeichnet, dass** er Mittel (7, 9) umfaßt, die dazu ausgelegt sind, elektrische Pulse zu empfangen und an die Zählmittel (4) zu senden, die von wenigstens einem zweiten Partikeldetektor stammen, und Mittel (7, 9), die dazu ausgelegt sind, die elektrischen Pulse, die er liefert, und die elektrischen Pulse, die er von dem zweiten Partikeldetektor empfängt, an Zählmittel eines dritten Partikeldetektors zu senden, wobei die Mittel (7, 9), die dazu ausgelegt sind, elektrische Pulse zu empfangen und an die Zählmittel (4) zu senden, die von wenigstens einem zweiten Partikeldetektor stammen, und die Mittel (7, 9), die dazu ausgelegt sind, die elektrischen Pulse, die er liefert, und die elektrischen Pulse, die er von dem zweiten Partikeldetektor empfängt, an einen dritten Partikeldetektor zu senden, ein ODER-Gatter umfassen, mit einem ersten Eingang, an den die von dem Partikeldetektor gelieferten elektrischen Pulse angelegt sind, wenigstens einem zusätzlichen Eingang, an dem die von dem zweiten Partikeldetektor gelieferten elektrischen Pulse angelegt sind, und einem Ausgang, der einerseits mit einem Eingang der Zählmittel (4) und andererseits mit einem Eingang eines ODER-Gatters der Zählmittel des dritten Partikeldetektors verbunden ist.

2. Partikeldetektor nach Anspruch 1, bei dem eine monostabile Vorrichtung platziert ist zwischen dem Ausgang der Mittel (1, 2, 3) zum Liefern der elektrischen Pulse ausgehend von den erfaßten Partikeln und dem ersten Eingang.

3. Partikeldetektor nach einem der Ansprüche 1 oder 2, **dadurch gekennzeichnet, dass** die Mittel, die dazu ausgelegt sind, elektrische Pulse zu empfangen und an die Zählmittel (4) zu senden, die von wenigstens einem zweiten Partikeldetektor stammen, und die Mittel, die dazu ausgelegt sind, die elektrischen Pulse, die er liefert, und die elektrischen Pulse, die er von dem zweiten Partikeldetektor empfängt, an Zählmittel eines dritten Partikeldetektors zu senden, einen Unterbrecher (A, B) umfassen, der in Reihe an dem zusätzlichen Eingang montiert ist.

4. Partikeldetektor nach einem der vorhergehenden Ansprüche, **dadurch gekennzeichnet, dass** er Mittel (C) umfaßt, die es ermöglichen, die Funktion der Zählmittel (4) zu hemmen.

5. Vorrichtung zum Zählen von Partikeln, **dadurch gekennzeichnet, dass** sie eine Mehrzahl von Partikeldetektoren nach einem der Ansprüche 1 bis 4 umfaßt.

6. Zählvorrichtung nach Anspruch 5, **dadurch gekennzeichnet, dass** die Partikeldetektoren in Form einer Detektormatrix angeordnet sind.

7. Zählvorrichtung nach Anspruch 6, **dadurch gekennzeichnet, dass** sie Mittel umfaßt zum Anordnen der Partikeldetektoren in Form von N Blöcken mit n x m benachbarten Partikeldetektoren, wobei N eine ganze Zahl größer oder gleich 1 ist und n und m ganze Zahlen größer als 1 sind, derart, dass wenigstens ein Block von Partikeldetektoren einen Partikeldetektor umfaßt, der die Partikel zählt, die durch alle oder einen Teil der Partikeldetektoren des Blocks erfaßt sind.

8. Zählvorrichtung nach Anspruch 7, **dadurch gekennzeichnet, dass** sie Mittel umfaßt zum Modifizieren der Zahl von Partikeldetektoren, die an wenigstens einem Block von Partikeldetektoren teilnehmen.

9. Zählvorrichtung nach einem der Ansprüche 6 bis 8, **dadurch gekennzeichnet, dass** ein Partikeldetektor Di/j, angeordnet an der Schnittstelle einer Zeile vom Rang i und einer Spalte vom Rang j, ein ODER-Gatter mit drei Eingängen umfaßt, wobei ein erster zusätzlicher Eingang mit einem ersten Unterbrecher (A) verbunden ist und ein zweiter zusätzlicher Eingang mit einem zweiten Unterbrecher (B) verbunden ist, wobei der erste (A) und der zweite (B) Unterbrecher des Partikeldetektors Di/j mit dem Ausgang des ODER-Gatters des Partikeldetektors D(i-1)/j bzw. mit dem Ausgang des ODER-Gatters des Partikeldetektors Di/(j-1) verbunden sind, wobei der Ausgang des ODER-Gatters des Detektors Di/j mit dem ersten Unterbrecher (A) des Partikeldetektors D(i+1)/j und mit dem zweiten Unterbrecher (B) des Partikeldetektors Di/(j+1) verbunden ist.

10. Verfahren zum Auslesen des Partikeldetektors nach Anspruch 1, **dadurch gekennzeichnet, dass** es einen Schritt umfaßt, währenddessen wenigstens ein erster Partikeldetektor die von wenigstens einem zweiten Partikeldetektor gelieferten Pulse empfängt und zählt, und einen Schritt, währenddessen die vom ersten Partikeldetektor gelieferten Pulse und die an den ersten Partikeldetektor durch den zweiten Partikeldetektor gelieferten Pulse an Zählmittel eines dritten Partikeldetektors gesendet werden.

11. Verfahren zum Zählen von Partikeln, die mittels einer Matrix von Partikeldetektoren erfaßt sind, **dadurch gekennzeichnet, dass** es einen Steuerschritt zum Anordnen der Partikeldetektoren der Matrix in Form von N Blöcken von n x m benachbarten Partikeldetektoren umfaßt, wobei N eine ganze Zahl größer oder gleich 1 ist und n und m ganze Zahlen größer als 1 sind, wobei die Partikeldetektoren wenigstens eines Blocks mit Hilfe eines Ausleseverfahrens nach Anspruch 10 derart ausgelesen werden, dass ein Partikeldetektor des wenigstens einen Blocks die Partikel zählt, die durch alle oder einen Teil der n x m Partikeldetektoren des Blocks erfaßt werden.

12. Verfahren nach Anspruch 11, **dadurch gekennzeichnet, dass** es eine Hemmung von Zählmitteln der Partikeldetektoren außer des Partikeldetektors des Blocks umfaßt, der die Partikel zählt, welche durch alle oder einen Teil der m x n Partikeldetektoren erfaßt werden.

## Claims

1. Particle detector comprising means (1, 2, 3) of delivering electrical pulses starting from detected particles, one electrical pulse being delivered for one detected particle, and means (4) of counting the delivered electrical pulses, **characterized in that** it comprises means (7, 9) capable of receiving and transmitting electrical pulses originating from at least one second particle detector to the counting means (4), and means (7, 9) capable of transmitting the electrical pulses that it delivers and the electrical pulses that it receives from the said second particle detector to counting means of a third particle detector, the means (7, 9) capable of receiving and transmitting electrical pulses originating from at least one second particle detector to the counting means (4) and the means (7, 9) capable of transmitting electrical pulses that it delivers and electrical pulses that it receives from the said second particle detector to a third particle detector including an "OR" gate with a first input to which electrical pulses delivered by the particle detector are applied, at least one additional input to which electrical pulses delivered by the second particle detector are applied, and an output connected firstly to an input of the counting means (4) and secondly to an input of an "OR" gate of the counting means of the third particle detector.

2. Particle detector according to claim 1, in which a monostable device is placed between the output from the means (1, 2, 3) of delivering electrical pulses starting from the detected particles and the first input.

3. Particle detector according to either claim 1 or 2, **characterized in that** the means capable of receiving and transmitting electrical pulses originating from at least one second particle detector to the counting means (4) and the means capable of transmitting electrical pulses that it delivers and electrical pulses that it receives from the said second particle detector to the counting means of a third particle detector include a switch (A, B) installed in series on the additional input.

4. Particle detector according to any one of the above claims, **characterized in that** it comprises means (C) capable of inhibiting operation of the counting means (4).

5. Particle counting device, **characterized in that** it comprises several particle detectors according to any one of claims 1 to 4.

6. Counting device according to claim 5, **characterized in that** the particle detectors are arranged in the form of a matrix of detectors.

7. Counting device according to claim 6, **characterized in that** it includes means of arranging particle detectors in the form of N blocks of n x m neighboring particle detectors, where N is an integer number equal to or greater than 1, and n and m being integer numbers greater than 1, such that at least one block of particle detectors includes a particle detector that counts particles detected by all or some of the particle detectors in the block.

8. Counting device according to claim 7, **characterized in that** it includes means of modifying the number of particle detectors that participate in at least one block of particle detectors.

9. Counting device according to any one of claims 6 to 8, **characterized in that** a particle detector Di/j located at the intersection of a row of rank i and a column of rank j, comprises an "OR" gate with three inputs, a first additional input being connected to a first switch (A) and a second additional input being connected to a second switch (B), the first switch (A) in the particle detector Di/j being connected to the output from the "OR" gate of particle detector D(i-1)/j and the second switch (B) being connected to the output from the "OR" gate of particle detector Di/(j-1), the output from the "OR" gate of detector Di/j being connected to the first switch (A) of the particle detector D(i+1)/j and to the second switch (B) of the particle detector Di/(j+1).

10. Process for reading the particle detector according to claim 1, **characterized in that** it comprises a step during which at least one first particle detector receives and counts pulses delivered by at least one second particle detector and a step during which the pulses delivered by the first particle detector and the pulses delivered to the first particle detector by the second particle detector are transmitted to counting means in a third particle detector.

11. Process for counting particles detected by a matrix of particle detectors, **characterized in that** it comprises a control step to arrange particle detectors in the matrix in the form of N blocks of n x m neighboring particle detectors, where N is an integer number greater than or equal to 1 and n and m are integer numbers greater than 1, the particle detectors in at least one block being read by means of a process for reading a detector according to claim 10 such that a particle detector in the said at least one block counts particles detected by all or some of the n x m particle detectors in the said block.

12. Process according to claim 11, **characterized in that** it comprises inhibition of the counting means of particle detectors in the block, other than the particle, detector in the block that counts particles detected by all or some of the m x n particle detectors.
